# EUROPEAN PATENT SPECIFICATION

(11) **EP 2 816 708 B1**
(45) Date of publication and mention of the grant of the patent: **21.09.2016**
(21) Application number: 13748841.7
(22) Date of filing: 07.02.2013
(51) Int. Cl.: H02K 1/18, H02K 15/02, H02K 1/14, H02K 1/16

(54) **STATOR CORE FOR MOTOR AND MANUFACTURING METHOD THEREFOR**
STATORKERN FÜR EINEN MOTOR UND HERSTELLUNGSVERFAHREN DAFÜR
NOYAU DE STATOR POUR MOTEUR ET SON PROCÉDÉ DE FABRICATION

(30) Priority: 14.02.2012 JP 2012029968
(43) Date of publication of application: 24.12.2014
(73) Proprietor: NHK Spring Co., Ltd., Yokohama-shi, Kanagawa 236-0004 (JP)
(72) Inventor: IWATA, Kazuo, Yokohama-shi Kanagawa 236-0004 (JP); KAMEDA, Yohei, Yokohama-shi Kanagawa 236-0004 (JP)
(74) Representative: Oppermann, Frank
(86) International application number: PCT/JP2013/000677
(87) International publication number: WO 2013/121753

(56) References cited:
- JP-A- H10 174 319
- JP-A- H11 355 984
- JP-A- 2005 051 941
- JP-A- 2006 333 657
- JP-A- 2009 539 338
- JP-A- 2010 093 960
- JP-A- 2010 148 329
- JP-A- 2011 015 592
- JP-A- 2011 254 623
- US-A1- 2003 066 183
- US-A1- 2005 067 912
- US-A1- 2009 289 522

## Description

The present invention relates to a stator core for a motor and a manufacturing method therefor.

### BACKGROUND OF THE INVENTION

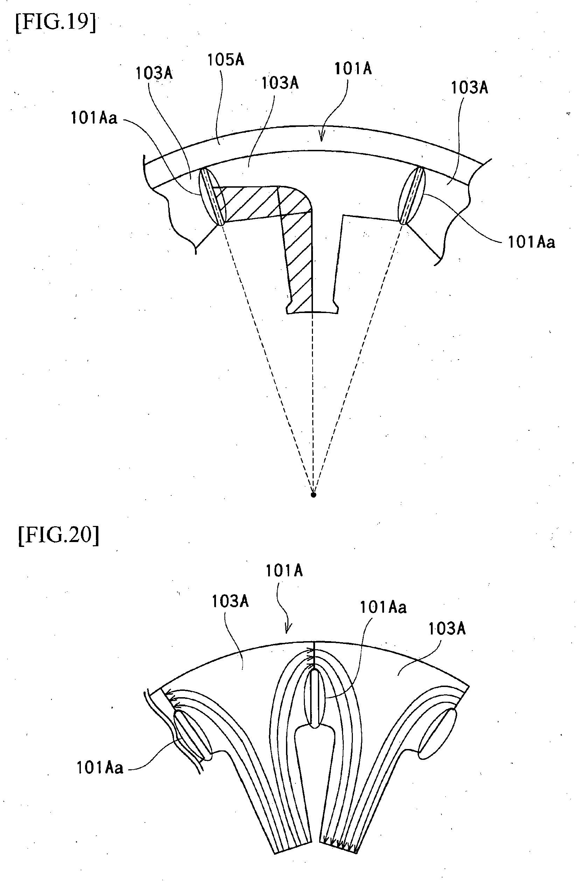

Conventionally, there are ones disclosed in Patent documents 1, 2, and 3 as illustrated in FIGs. 19 to 24.

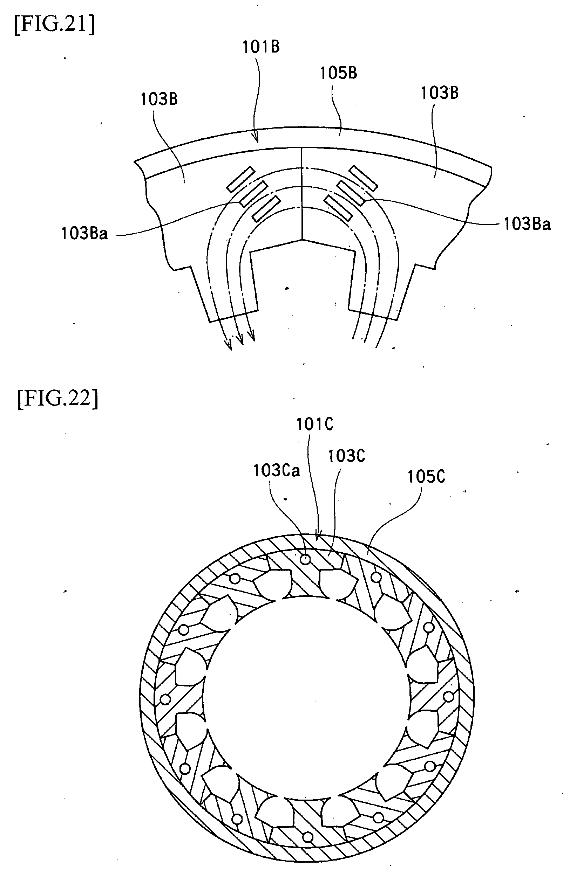

FIG. 19 is a partial front view illustrating a state where a stator core is fitted to a core case by shrinkage fitting, FIG. 20 is a partial front view of the stator core, FIG. 21 is a partial front view illustrating a state where a stator core is fitted to a core case by shrinkage fitting, FIG. 22 is a sectional view illustrating the state where the stator core is fitted to the core case by shrinkage fitting.

In any FIGs. 19 to 24, stator core divided bodies 103A, 103B, or 103C of a stator core 101A, 101 B, or 101C are annularly joined together and fixedly put into a core case 105A, 105B, or 105C as an annular member by shrinkage fitting.

Where, at the time of the shrinkage fitting, there is a problem of increasing iron loss due to compression stress generated on each stator core divided body 103A, 103B, or 103C in a circumferential direction to reduce the output efficiency of the motor.

Against this problem, in the stator core 101A of FIGs. 19 and 20, slits 101 Aa are formed so as not to generate the compression stress. In the stator core 103B or 103C of FIGs. 21 or 22, holes 103Ba or 103Ca are formed so as to reduce the compression stress.

However, there is a problem that the slits 101Aa or holes 103Ba or 103Ca introduce the increase in magnetic resistance thereat to deteriorate the magnetic characteristics.

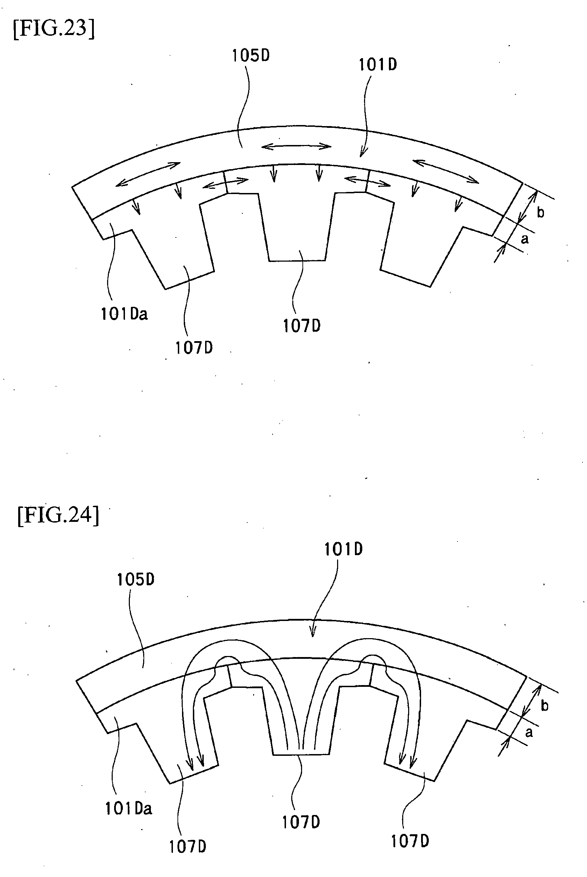

On the other hand, there is an example for one reducing pressing force received by a stator core without slits or holes as illustrated in FIGs. 23 and 24 disclosed in Patent document 4. FIG. 23 is a partial front view illustrating a stress generating state in a state where a stator core is fitted to a core case by shrinkage fitting, and FIG. 24 is a partial front view illustrating a magnetic flux formation state in the state where the stator core is fitted to the core case by shrinkage fitting.

In FIGs. 23 and 24, a yoke portion 101 Da included in a stator core 101 D has a radial thickness "a" is formed less than a radial thickness "b" of a core case 105D.

With these setting of the thicknesses "a" and "b", tensile stress is generated on the core case 105D as illustrated in FIG. 23 to pass magnetic flux through the core case 105D.

However, large compression stress is caused to act on the yoke portion 101 Da closer to tooth portions 107D, and there is a drawback in reducing magnetic resistance at the yoke portion 101 Da existing between the tooth portions 107D and the core case 105D.

### PRIOR ART DOCUMENT

PATENT DOCUMENT US 2005/0067912 discloses a stator core.

PATENT DOCUMENT 1: JP2005-51941A
PATENT DOCUMENT 2: JP2009-261162A
PATENT DOCUMENT 3: JP2002-136013A
PATENT DOCUMENT 4: JP2011-125180A

### SUMMARY OF THE INVENTION

### PROBLEM TO BE SOLVED BY THE INVENTION

A problem to be solved is that the reduction of the compression stress by means of the slits or holes causes the increase in magnetic resistance to deteriorate the magnetic characteristics whereas the setting of the thicknesses of the annular member and yoke portion involves the drawback in reducing the magnetic resistance.

### MEANS FOR SOLVING THE PROBLEM

The present invention provides a stator core for a motor in order to further improve the magnetic characteristics. The stator core includes an annular yoke portion and tooth portions protruding inwardly in a radial direction from an inner periphery of the yoke portion, wherein an outer peripheral edge of the yoke portion is attached to an inner peripheral surface of an annular member. The yoke portion includes displacement portions displaced by receiving radially-inward pressing force from the annular member, and deformation portions deformed according to displacements of the displacement portions to generate tensile stress so as to form tensile stress regions through which magnetic flux passes between the tooth portions and the yoke portion or so as to counterbalance compression stress generated by the pressing force from the annular member. The displacement portions, which outwardly protrude in the radial direction before the yoke portion is attached to the annular member with respect to an internal diameter dimension of the inner peripheral surface of the annular member after the attaching, perform the displacements by attaching the yoke portion to the annular member with an interference.

The present invention provides a stator core manufacturing method for manufacturing the aforementioned stator core for a motor. The method includes a divided body processing step processing a plurality of stator core divided bodies having the displacement portions and the deformation portions, and an assembling step annularly arranging the plurality of stator core divided bodies so that division edges face each other in the circumferential direction, respectively and attaching the stator core bodies to the inner peripheral surface of the annular member with a radially-inward interference, thereby to conduct the deformations of the deformation portions due to the displacements of the displacement portions.

The present invention provides a stator core manufacturing method for manufacturing the aforementioned stator core for a motor. The method includes a core processing step forming a ring-shaped stator core having the displacement portions and the deformation portions before the attaching to the annular member, and an assembling step attaching the stator core to an inner periphery of the annular member with a radially-inward interference, thereby to conduct the deformations of the deformation portions due to the displacements of the displacement portions.

### EFFECT OF THE INVENTION

The stator core for a motor of the present invention, due to the aforementioned configuration, can generate the tensile stress by the deformation portions deformed according to the displacements of the displacement portions displaced by receiving the radially-inward pressing force from the annular member. With this tensile stress, the tensile stress regions through which the magnetic flux passes between the tooth portions and the yoke portion can be formed on the yoke portion or the compression stress generated on the yoke portion by the pressing force from the annular member can be counterbalanced.

Accordingly, the magnetic resistance of the yoke portion can be reduced with the tensile stress portions of the yoke portion of the stator core, or the compression stress on the yoke portion can be reduced or zeroed to reduce the magnetic resistance.

Therefore, many of the magnetic flux can pass through the tensile stress regions on the yoke portion or through the entire yoke portion with zero compression stress, thereby to reduce the magnetic loss such as iron loss.

The stator core manufacturing method of the present invention, due to the aforementioned configuration, manufactures the plurality of stator core divided bodies, annularly joins the plurality of stator core divided bodies together in the circumferential direction, and attaches them to the inner periphery of the annular member with the radially-inward interference, thereby to form the tensile stress regions or reduce or zero the compression stress.

The stator core manufacturing method of the present invention, due to the aforementioned configuration, manufactures a semi-finished stator core and attaches the semi-finished stator core to the inner periphery of the annular member with the radially-inward interference, thereby to form the tensile stress regions or reduce or zero the compression stress.

### BRIEF DESCRIPTION OF THE DRAWINGS

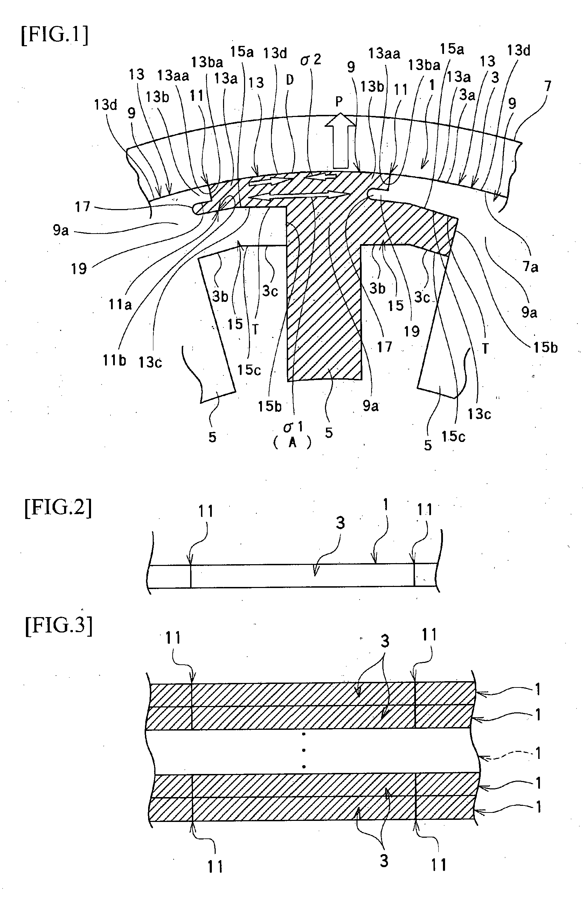

[FIG. 1] It is a partial front view illustrating a state where a stator core is fitted to a motor case by shrinkage fitting. (Embodiment 1)
[FIG. 2] It is a circumferential side view of the stator core. (Embodiment 1)
[FIG. 3] It is a sectional view illustrating a lamination of the stator cores. (Embodiment 1)

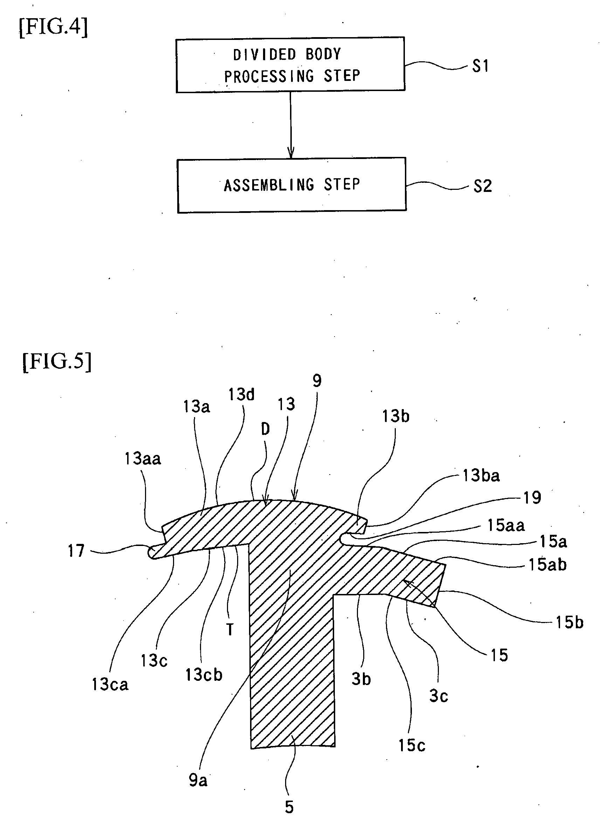

[FIG. 4] It is a process chart illustrating a stator core manufacturing method. (Embodiment 1)
[FIG. 5] It is a partial front view illustrating a stator core divided body processed by a divided body processing step. (Embodiment 1)

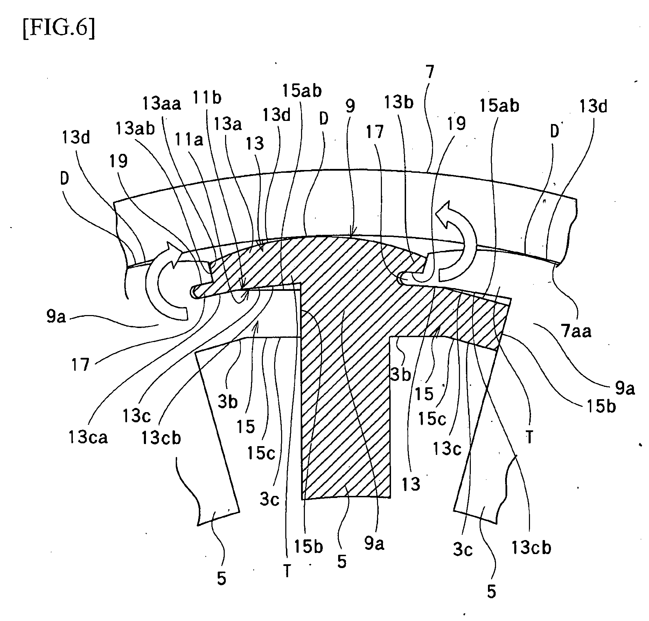

[FIG. 6] It is a partial front view illustrating a joining, state of stator core divided bodies before the shrinkage fitting, together with the motor case before shrinkage due to the shrinkage fitting. (Embodiment 1)

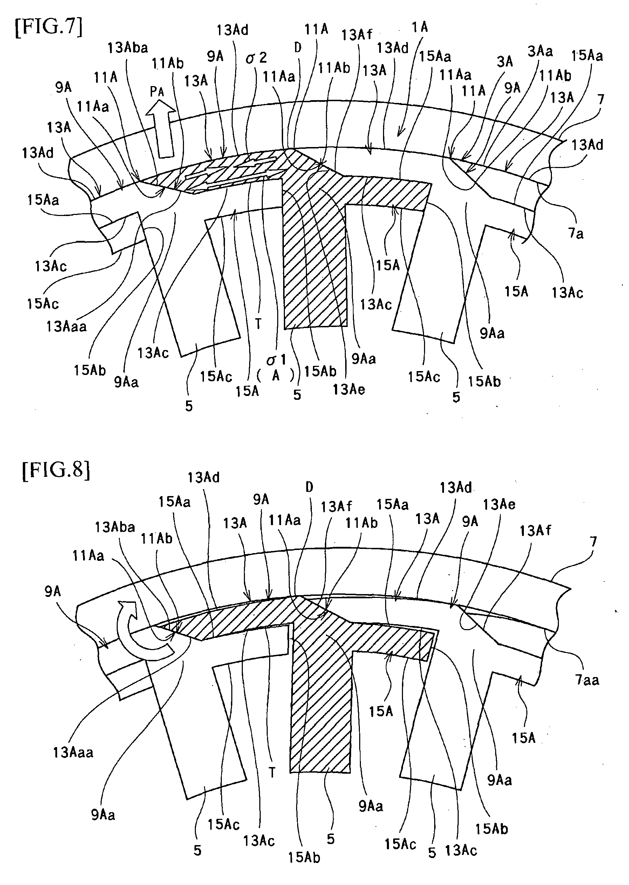

[FIG. 7] It is a partial front view illustrating a state where a stator core is fitted to a motor case by shrinkage fitting. (Embodiment 2)
[FIG. 8] It is a partial front view illustrating a joining state of stator core divided bodies before the shrinkage fitting, together with the motor case before shrinkage due to the shrinkage fitting. (Embodiment 2)

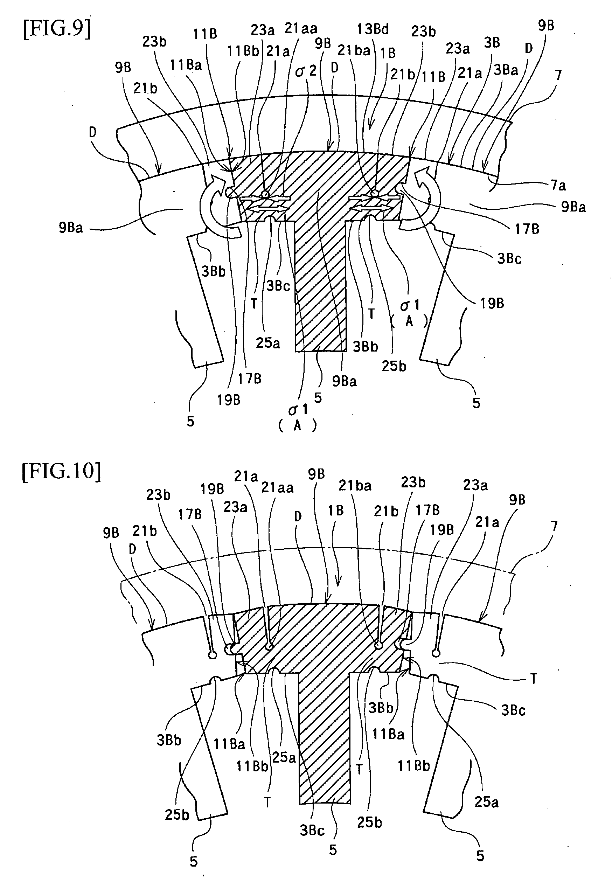

[FIG. 9] It is a partial front view illustrating a state where a stator core is fitted to a motor case by shrinkage fitting. (Embodiment 3)
[FIG. 10] It is a partial front view illustrating a joining state of stator core divided bodies before the shrinkage fitting. (Embodiment 3)

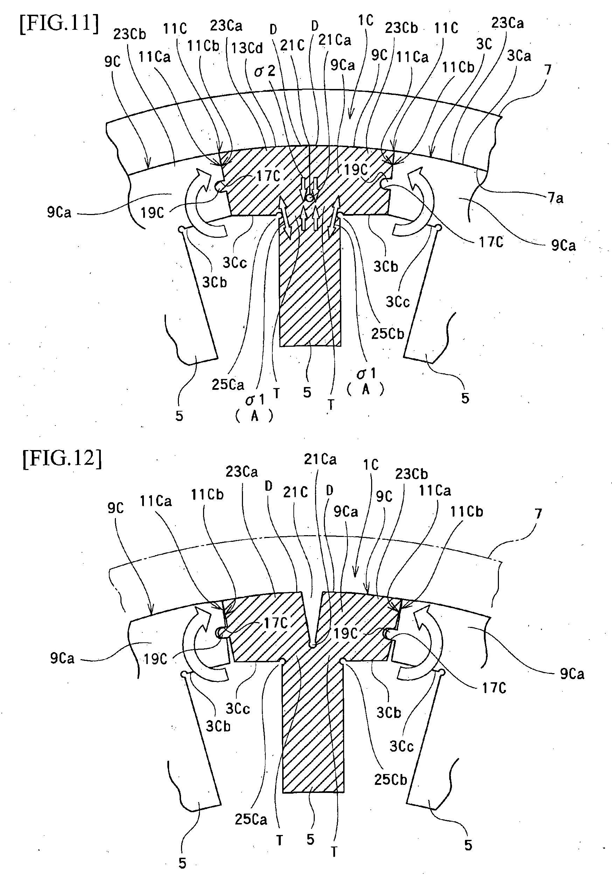

[FIG. 11] It is a partial front view illustrating a state where a stator core is fitted to a motor case by shrinkage fitting. (Embodiment 4)
[FIG. 12] It is a partial front view illustrating a joining state of stator core divided bodies before the shrinkage fitting. (Embodiment 4)

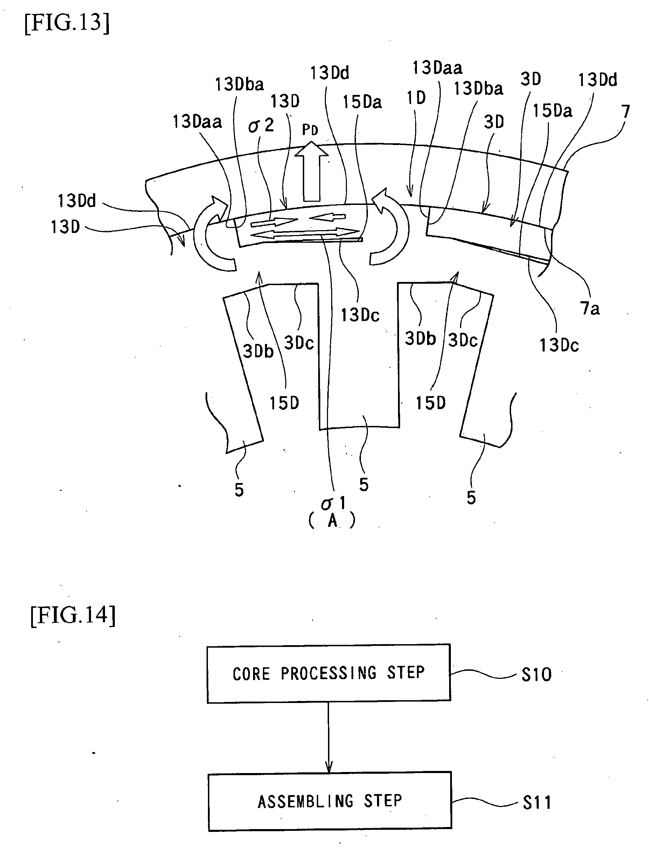

[FIG. 13] It is a partial front view illustrating a state where a stator core is fitted to a motor case by shrinkage fitting. (Embodiment 5)
[FIG. 14] It is a process chart illustrating a stator core manufacturing method. (Embodiment 5)

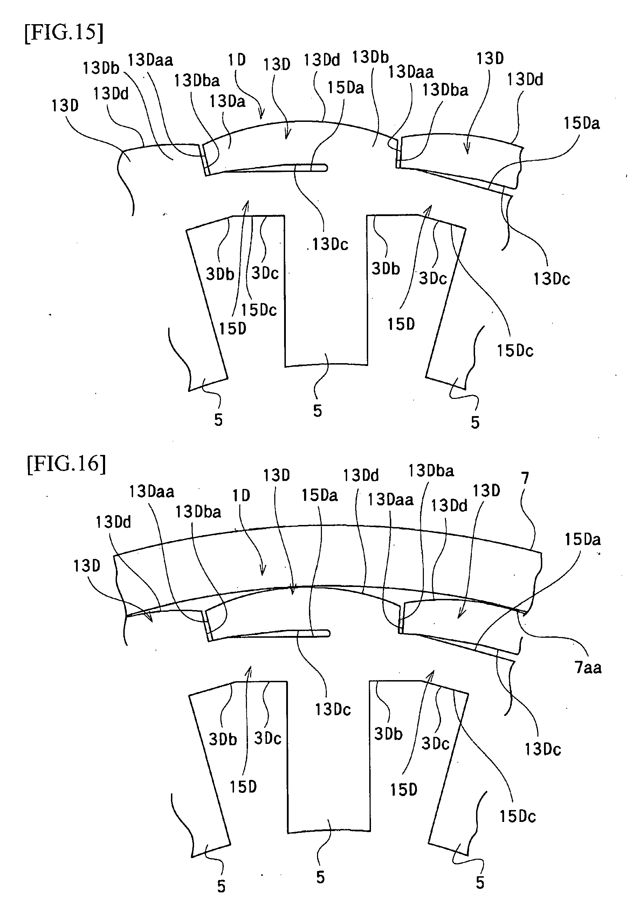

[FIG. 15] It is a partial front view illustrating a state of the stator core before the shrinkage fitting. (Embodiment 5)
[FIG. 16] It is a partial front view illustrating the stator core before the shrinkage fitting, together with the motor case before shrinkage due to the shrinkage fitting. (Embodiment 5)

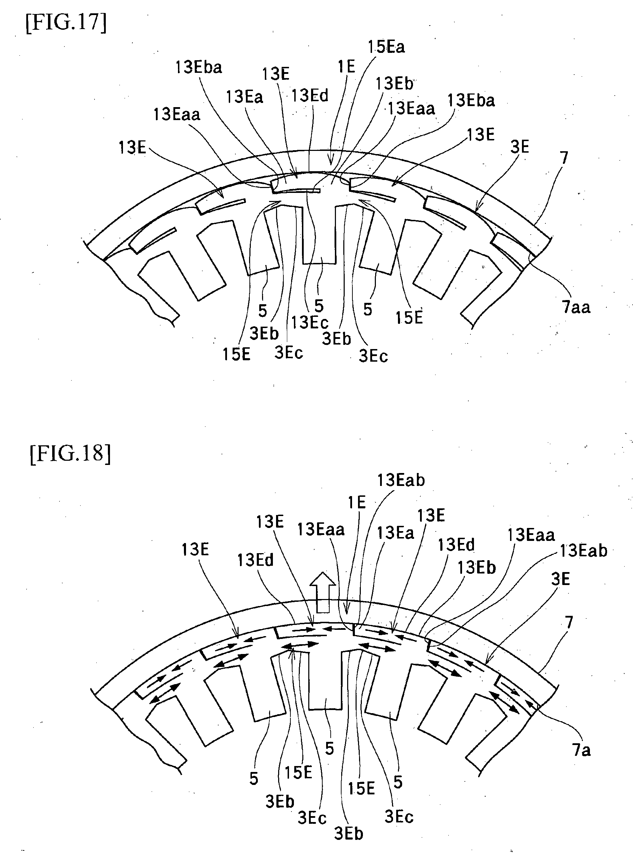

[FIG. 17] It is a partial front view illustrating a stator core before shrinkage fitting, together with a motor case before shrinkage due to the shrinkage fitting. (Embodiment 6)
[FIG. 18] It is a partial front view illustrating a state where the stator core is fitted to the motor case by shrinkage fitting. (Embodiment 6)
[FIG. 19] It is a partial front view illustrating a state where a stator core is fitted to a motor case by shrinkage fitting. (Related art)
[FIG. 20] It is a partial front view of the stator core. (Related art)
[FIG. 21] It is a partial front view illustrating a state where a stator core is fitted to a core case by shrinkage fitting. (Related art)
[FIG. 22] It is a sectional view illustrating the state where the stator core is fitted to the core case by shrinkage fitting. (Related art)
[FIG. 23] It is a partial front view illustrating a stress generating state in a state where a stator core is fitted to a core case by shrinkage fitting. (Related art)
[FIG. 24] It is a partial front view illustrating a magnetic flux formation state in the state where the stator core is fitted to the core case by shrinkage fitting. (Related art)

### EMBODIMENT FOR CARRYING OUT THE INVENTION

The object that is to further improve the magnetic characteristics is accomplished by a stator core 1. The stator core 1 includes an annular yoke portion 3 and tooth portions 5 protruding inwardly in a radial direction from an inner periphery of the yoke portion 3, wherein an outer peripheral edge 3a of the yoke portion 3 is attached to an inner peripheral surface 7a of an annular member 7. The yoke portion 3 includes displacement portions D displaced by receiving radially-inward pressing force from the annular member 7, and deformation portions T deformed according to displacements of the displacement portions D to generate tensile stress σ1 so as to form tensile stress regions A through which magnetic flux passes between the tooth portion 5 and the yoke portion or so as to counterbalance compression stress σ2 generated by the pressing force from the annular member 7. The displacement portions D, which outwardly protrude in the radial direction before the yoke portion 3 is attached to the annular member 7 with respect to the internal diameter dimension of the inner peripheral surface 7a of the annular member 7 after the attaching, perform the displacements by attaching the yoke portion 3 to the annular member 7 with an interference.

### EMBODIMENT 1

FIG. 1 is a partial front view illustrating a state where a stator core is fitted to a motor case by shrinkage fitting, FIG. 2 is a circumferential side view of the stator core, and FIG. 3 is a partly-omitted sectional view illustrating a lamination of the stator cores.

As illustrated in FIGs. 1 to 3, a stator core 1 is formed of, for example, electromagnetic steel plate of magnetic material, and includes an annular circular yoke portion 3 and a plurality of tooth portions 5 protruding inwardly in a radial direction from an inner periphery of the yoke portion 3. An outer peripheral edge 3a of the yoke portion 3 is formed into a substantial circle, and an inner peripheries 3b and 3c are symmetrically in a circumferential direction between the tooth portions 5 and are linearly formed to intersect each other at an angle.

A plurality of the stator cores 1 are laminated and the outer periphery of each yoke portion 3 in the laminated state is attached to the inner peripheral surface 7a of a motor case 7 as an annular member with an interference. This attaching is carried out by, for example, shrinkage fitting. The yoke portion 3 is attached to the motor case 7 with the radially-inward interference, and the outer peripheral edge 3a and the inner peripheral surface 7a contact with each other without a gap and have substantially the same curvature.

The yoke portion 3 has displacement portions D and deformation portions T.

The displacement portions D have been displaced by receiving radially-inward pressing force from the motor case 7.

The deformation portions T have been deformed according to the displacement of the displacement portion D and keep on generating the tensile stress σ1 on the yoke portion 3. With this tensile stress σ1, tensile stress regions A through which magnetic flux passes between the yoke portion and the individual tooth portions 5 are formed. The generated tensile stress σ1 may counterbalance the compression stress σ2 generated by the pressing force from the motor case 7, to reduce or zero the compression stress.

The stator core 1 is composed of a plurality of stator core divided bodies 9. Each stator core divided body 9 is a piece of the yoke portion 3 that is divided in the circumferential direction with division lines 11 spanning between the inner and outer peripheries.

Each stator core divided body 9 is constructed with respect to each tooth portion 5 having a yoke component portion 9a. The individual stator core divided bodies 9 are annularly arranged so that division edges 11 a and 11 b at each division line 11 face each other in the circumferential direction.

The yoke portion 3 has outer portions 13 and inner portions 15 in the radial direction through the divisions due to the division lines 11.

Each outer portion 13 is arranged so as to protrude along one side in the circumferential direction of the yoke component portion 9a, and the inner portion 15 is arranged so as to protrude along the other side in the circumferential direction of the yoke component portion 9a on an internal diameter side relative to the outer portion 13.

According to this embodiment, each outer portion 13 spans on an outer peripheral side of each yoke component portion 9a in the circumferential direction, and one side 13a of the outer portion 13 on one side in the circumferential direction of each tooth portion 5 is longer than the other side 13b of the same.

At the one side 13a of each outer portion 13, a convex portion 17 is formed to protrude in the circumferential direction on a radial inner edge side. At an internal diameter side of the other side 13b of each outer portion 13, a concave portion 19 is formed in an interspace with respect to an external diameter side of the inner portion 15.

A front end 13aa of the one side 13a of the individual outer portion 13 faces a front end 13ba of the other side 13b of the individual adjacent outer portion 13 without a gap so that each convex portion 17 is fitted to each concave portion 19 without a gap. This fitting of the concave and convex portions 19 and 17 at each interspace of the outer portions 13 constructs an engagement portion provided at each interspace of the stator core divided bodies 9, the engagement portion through which the deformation portion T of one stator core divided body 9 engages with the other stator core divided body 9 so as to cause the deformation.

A radial inner edge 13c of each outer portion 13 and a radial outer edge 15a of each inner portion 15 face each other without a gap, and a front edge 15b of the individual inner portion 15 faces each tooth portion 15 in the circumferential direction without a gap.

The division line 11 spans between the inner and outer peripheries of the yoke portion 3. Namely, the division line 11 at each interspace of the adjacent stator core divided bodies 9 spans from an interspace between the one side 13a and the other side 13b of the outer portions 13, through an interspace between the convex portion 17 and the concave portion 19 and an interspace between the radial inner edge 13c of the outer portion 13 and the radial outer edge 15a of the inner portion 15, to an interspace between the front edge 15b of the inner portion 15 and the tooth portion 5.

A radial outer edge 13d of each outer portion 13 has been deformed along the inner peripheral surface 7a of the motor case 7 and has substantially the same curvature as the inner peripheral surface 7a. However, a slight gap may be formed between each interspace of the radial outer edges 13d and the inner peripheral surface 7a.

### [STATOR CORE MAUFACTURING METHOD]

FIG. 4 is a process chart illustrating a stator core manufacturing method, FIG. 5 is a partial front view illustrating a stator core divided body processed by a divided body processing step, and FIG. 6 is a partial front view illustrating a joining state of stator core divided bodies before the shrinkage fitting, together with the motor case before shrinkage due to the shrinkage fitting.

As illustrated in FIG. 4, the stator core manufacturing method of the present invention has a divided body processing step S1 for manufacturing the stator core 1 of the motor and an assembling step S2.

The divided body processing step S1 forms a plurality of stator core divided bodies 9... in the circumferential direction as illustrated in FIG. 5 that are divided by the division lines 11 illustrated in FIG. 1.

The yoke component portion 9a, the inner portion 15, and the outer portion 13 with the convex portion 17 and the concave portion 19 are formed to each stator core divided body 9 that is provided with the displacement portion D and the deformation portion T.

The radial outer edge 13d of each outer portion 13 before attaching to the motor case 7 is formed into an arc shape with a larger curvature than the inner peripheral surface 7a with a shrunk internal diameter due to the shrinkage fitting after the attaching. On the radial inner edge 13c of each outer portion 13, a linear edge portion 13ca on the convex portion 17 side and a linear edge portion 13cb on one side of each tooth portion 5 are formed to intersect each other.

On the radial outer edge 15a of each inner portion 15, a linear edge portion 15aa on the concave portion 19 side and a linear edge portion 15ab on the front edge 15b side of each inner portion 15 are formed to intersect each other.

On the radial inner edge 15c of each inner portion 15, inner peripheral edges 3b and 3c of the yoke portion 3 are formed.

In the assembling step S2, as illustrated in FIG. 6, the individual stator core divided bodies 9 are annularly arranged so that the division edges 11 a and 11b face each other in the circumferential direction.

Before attaching to the motor case 7 by shrinkage fitting, the radial outer edge 13d side of each outer portion 13 of each annularly-joined stator core divided body 9 as the displacement portion D protrudes outwardly in the radial direction with respect to the internal diameter dimension of the inner peripheral surface 7a in FIG. 1 that is shrunk by shrinkage fitting in FIG. 1 after the attaching i.e. with respect to the outer dimension of the outer peripheral edge 3a of the yoke portion 3 after the attaching by shrinkage fitting. With this protrusion, a gap is formed between each radial outer edge 13d and the inner peripheral surface 7aa before shrinkage due to the shrinkage fitting of the motor case 7.

A gap is also formed between the front end 13aa of the one side 13a of the individual outer portion 13 and the front end 13ba of the other side 13b of each adjacent outer portion 13.

The linear edge portion 13cb of the radial inner edge 13c of each outer portion 13, before the shrinkage due to the shrinkage fitting of the motor case 7 to which the yoke portion 3 is fixed, forms a gap with respect to the linear edge portion 15ab of the radial outer edge 15a of each inner portion 15.

The front edge 15b of each inner portion 15 has a gap with respect to one side of each tooth portion 5 and a gap is included also between the convex portion 17 and the concave portion 19, before the shrinkage due to the shrinkage fitting of the motor case 7.

Each stator core divided body 9 annularly arranged in the circumferential direction is attached to the inner periphery of the motor case 7 by shrinkage fitting with the radially-inward interference, to become the state of FIG. 1.

Namely, the displacement portion D of each outer portion 13 receives the radially-inward pressing force from the motor case 7 and is inwardly displaced in the radial direction, the outer portion 13 deforms through the engagement of the concave and convex portions 19 and 17 as arrows to cause the deformation portion T to deform, and the radial outer edge 13d becomes a state where it follows the inner peripheral surface 7a after the shrinkage due to the shrinkage fitting.

In this state, the gap between the radial outer edge 13d and the inner peripheral surface 7a and the gap between the linear edge portion 13cb and the linear edge portion 15ab are absorbed.

With the displacement of the displacement portion D, the gap between the front edge 15b of each inner portion 15 and each tooth portion 5 and the gap between the convex and concave portions 19 and 17 disappear.

Incidentally, when annularly arranging each stator core divided body 9 before the shrinkage fitting to the motor case 7, facing without a gap in the circumferential direction may be performed between the front edge 15b of each inner portion 15 and each tooth portion 5 and between the convex portion 17 and the concave portion 19 to perform the aforementioned assembling.

When the deformation portion T is deformed according to the displacement of the displacement portion D of the outer portion 13, the radial outer edge 13d of the outer portion 13 frictionally engages with the inner peripheral surface 7a.

### [EFFECT OF EMBODIMENT 1]

In Embodiment 1 of the present invention, the stator core 1 includes the annular yoke portion 3 and the tooth portions 5 protruding inwardly in the radial direction from the inner periphery of the yoke portion 3, wherein the outer peripheral edge 3a of the yoke portion 3 is attached to the inner peripheral surface 7a of the motor case 7. The yoke portion 3 includes the displacement portions D displaced by receiving the radially-inward pressing force from the motor case 7, and the deformation portions T deformed according to the displacements of the displacement portions D to generate the tensile stress σ1 so as to form the tensile stress regions A through which the magnetic flux passes between the tooth portions 5 and the yoke portion or so as to counterbalance the compression stress σ2 generated by the pressing force from the motor case 7. The displacement portions D, which protrude outwardly in the radial direction before the yoke portion 3 is attached to the motor case 7 with respect to the internal diameter dimension of the inner peripheral surface 7a of the motor case 7 after the attaching, perform the displacements by attaching the yoke portion 3 to the annular member 7 with the interference.

As stated above, as illustrated in FIG. 1, the yoke portion 3 with the deformations of the deformation portions T according to the displacements of the displacement portions D generates the tensile stress σ1 on the internal diameter side and forms with this tensile stress σ1 the tensile stress regions A through which the magnetic flux passes between the yoke portion and the individual tooth portions 5.

Further, with the generated tensile stress σ1, the compression stress σ2 generated by the pressing force from the motor case 7 can also be counterbalanced, thereby to reduce or zero the compression stress.

Therefore, many of the magnetic flux can pass through the internal diameter side of the yoke portion 3 including the tensile stress regions A or through the entire yoke portion 3 with the compression stress σ2 that is reduced or zeroed, thereby to reduce the magnetic loss such as iron loss. Accordingly, it allows the magnetic flux to efficiently pass to further improve the output efficiency of the motor.

It has the stator core divided bodies 9 divided in the circumferential direction with the divisions at the division lines 11 spanning between the inner and outer peripheries at the yoke portion 3 and having tooth portions 5 and yoke component portions 9a, annularly arranges each stator core divided body 9 so that the division edges 11 a and 11 b due to each division face each other in the circumferential direction, and provides at each interspace between the stator core divided bodies 9 the engagement portion 17 and 19 through which the deformation portion T of one stator core divided body 9 engages with the other stator core divided body 9 so as to cause the deformation.

Accordingly, the stator core 1 can be composed of the individual stator core divided bodies 9, can surely cause the deformation by the individual concave and convex portions 17 and 19 at each annularly-arranged stator core divided body 9 to be surely fixed to the motor case 7, and provides the aforementioned effects.

The yoke portion 3 has the outer portion 13 and the inner portion 15 in the radial direction that are formed in the circumferential direction by the individual divisions. The outer portion 13 is arranged so as to protrude along the one side in the circumferential direction of the yoke component portion 9a. The inner portion 15 is arranged so as to protrude along the other side in the circumferential direction of the yoke component portion 9a on the internal diameter side relative to the outer portion 13. The radial outer edge 13d side of the outer portion 13 outwardly protrudes in the radial direction as the displacement portion D before the yoke portion 3 is attached to the motor case 7. The radial inner edge 13c side of the outer portion 13 has the gap with respect to the radial outer edge 15a of the inner portion 15 as the deformation portion T before the yoke portion 3 is attached to the motor case 7. The deformation of the deformation portion T and the displacement of the displacement portion D are performed by attaching the yoke portion 3 to the motor case 7 with the interference due to the shrinkage fitting.

Therefore, the displacement portion D of the outer portion 13 receives the radially-inward pressing force due to the attaching to the motor case 7 by the shrinkage fitting, so that the deformation portion T is deformed.

With this deformation of the deformation portion T according to the displacement of the displacement portion D, the tensile stress σ1 is generated on the radial inner edge 13c side in each outer portion 13, thereby to form with this tensile stress σ1 the tensile stress region A through which the magnetic flux passes between the yoke portion and each tooth portion 5.

Further, with the generated tensile stress σ1, the compression stress σ2 generated on the radial outer edge 13d side of each outer portion 13 by the pressing force from the motor case 7 can also be counterbalanced, thereby to reduce or zero the compression stress.

Therefore, many of the magnetic flux can pass through the tensile stress region A of each outer portion 13 and the inner portion 15 or through the entire yoke portion 3 with the compression stress σ2 that is reduced or zeroed, thereby to reduce the magnetic loss such as iron loss. Accordingly, it allows the magnetic flux to efficiently pass to further improve the output efficiency of the motor.

Each inner portion 15, which has the gap with respect to each tooth portion 5 in the circumferential direction before the attaching to the motor case, faces each tooth portion without a gap by the attaching to the motor case so as to become a zero-compression-stress state or so as to become a state in which, if a compression stress is generated on the external diameter side of the outer portion 13, the compression stress is less (including zero) than the compression stress generated in the external diameter side. -

Accordingly, the passage of the magnetic flux of each outer portion 13 is surely improved.

When assembling each outer portion 13 from the curved protrusion state of FIG. 6 to the state of FIG. 1, the radial outer edge 13d of each outer portion 13 frictionally engages with and is surely fixed to the inner peripheral surface 7a of the motor case 7. With this fixation due to the frictional engagement, the interference according to the shrinkage fitting to the motor case 7 may be reduced and the compression stress σ2 acting on the outer portion 13 may be also reduced.

### EMBODIMENT 2

FIGs. 7 and 8 relate to Embodiment 2 of the present invention in which FIG. 7 is a partial front view illustrating a state where a stator core is fitted to a motor case by shrinkage fitting and FIG. 8 is a partial front view illustrating a joining state of stator core divided bodies before the shrinkage fitting together with the motor case before shrinkage due to the shrinkage fitting. In addition, a basic structure is the same as that of Embodiment 1, the same components are represented with the same reference numerals and corresponding components are represented with the same reference numerals with A to avoid repetition in a description.

As illustrated in FIG. 7, a stator core 1 A of this embodiment also has respective outer portions 13A and inner portions 15A.

The outer portion 13A is integrally arranged so as to protrude on one side in a circumferential direction of a yoke component portion 9Aa on an external diameter side of each tooth portion 5. The inner portion 15A is integrally arranged so as to protrude on the other side in the circumferential direction of the yoke component portion 9Aa.

According to this embodiment, inclined faces 13Aaa and 13Aba construct an engagement portion. The inclined face 13Aaa is formed at a front end of the outer portion 13A, and the inclined face 13Aba is formed at a base end of the outer portion 13A.

In a shrinkage fitting state to a motor case 7 of FIG. 7, a radial inner edge 13Ac of each outer portion 13A and a radial outer edge 15Aa of each inner portion 15 face each other without a gap, and a front edge 15Ab of each inner portion 15A faces each tooth portion 5 without a gap.

A division line 11 A spans between inner and outer peripheries of a yoke portion 3A. Namely, the division line 11A includes division edges 11Aa and 11Ab spanning from the inclined faces 13Aaa and 13Aba at each interspace between the outer portions 13A, through an interspace between the radial inner edge 13Ac of each outer portion 13A and the radial outer edge 15Aa of each inner portion 15A, to an interspace between the front edge 15Ab of each inner portion 15A and each tooth portion 5.

A radial outer edge 13Ad of each outer portion 13 is continuous in a circle along an inner peripheral surface 7a of the motor case 7 and has substantially the same curvature as the inner peripheral surface 7a.

When manufacturing, in a divided body processing step S1, the stator core divided bodies 9A that are provided with the displacement portions D and the deformation portions T, and in an assembling step S2, each stator core divided body 9A is annularly arranged so that individual division edges 11Aa and 11Ab face each other in the circumferential direction as illustrated in FIG. 8.

Before attaching to the motor case 7 by shrinkage fitting in Fig. 8, the radial outer edge 13Ad side of each outer portion 13A of each annularly-joined stator core divided body 9 as the displacement portion D outwardly protrudes in a radial direction with respect to the internal diameter dimension of the inner peripheral surface 7a of the motor case 7 in FIG. 7 after the attaching i.e. with respect to the outer dimension of an outer peripheral edge 3Aa of the yoke portion 3A. With this protrusion, a gap is formed between the radial outer edge 13Ad and the inner peripheral surface 7aa before shrinkage due to the shrinkage fitting of the motor case as illustrated in FIG. 8.

The radial inner edge 13Ac of each outer portion 13A before shrinkage as a part of the deformation portion T due to the shrinkage fitting of the yoke portion 3A to the motor case 7 forms a gap in an interspace with respect to the radial outer edge 15Aa of each inner portion 15A. This gap is set by, for example, making the curvature of the radial inner edge 13Ac slightly larger than the curvature of the radial outer edge 15Aa.

The front edge 15Ab of each inner portion 15A has a gap with respect to one side of each tooth portion 5 before attaching to the motor case 7 by shrinkage fitting.

Each stator core divided body 9A annularly arranged in the circumferential direction is attached to the inner peripheral surface 7a of the motor case 7 by shrinkage fitting with a radially-inward interference, to become the state of FIG. 7.

Namely, with the shrinkage of the motor case 7 due to the shrinkage fitting, the displacement portion D of each outer portion 13A receives the radially-inward pressing force from the motor case 7 and is displaced inwardly in the radial direction, and becomes a state where the radial outer edge 13Ad follows the inner peripheral surface 7a while causing the deformation portion T to deform by relative deviation due to the engagement of the inclined faces 13Aaa and 13Aba and the thrust P_{A} along the inclination.

In this state, the gap between the radial outer edge 13Ad and the inner peripheral surface 7a, the gap between the radial inner edge 13Ac and the radial outer edge 15Aa, and the gap between the front edge 15Ab of each inner portion 15A and each tooth portion 5 are absorbed.

Incidentally, when annularly arranging each stator core divided body 9A before the attaching to the motor case 7, facing without a gap in the circumferential direction may be performed between the front edge 15Ab of each inner portion 15A and each tooth portion 5 to perform the aforementioned assembling.

When the deformation portion T is deformed according to the displacement of the displacement portion D of the outer portion 13A, the outer portion 13A frictionally engages with the inner peripheral surface 7a of the motor case 7. Accordingly, each stator core divided body 9A can be stably annularly assembled.

Each outer portion 13A with the deformation of the deformation portion T according to the displacement of the displacement portion D generates the tensile stress σ1 on the radial inner edge 13Ac side, and the tensile stress σ1 forms the tensile stress region A through which the magnetic flux passes between each outer portion and each tooth portion.

Further, with the generated tensile stress σ1, the compression stress σ2 generated on the radial outer edge 13Ad side of each outer portion 13A by the pressing force from the motor case 7 is counterbalanced, thereby to reduce or zero the compression stress.

In this way, this embodiment also provides the same effects as Embodiment 1.

Incidentally, in practice a slight gap may be formed between the radial inner edge 13Ac of each outer portion 13A and the radial outer edge 15Aa of each inner portion 15A. This gap is along a direction in which the magnetic flux passes and has no influence.

### EMBODIMENT 3

FIGs. 9 and 10 relate to Embodiment 3 of the present invention in which FIG. 9 is a partial front view illustrating a state where a stator core is fitted to a motor case by shrinkage fitting and FIG. 10 is a partial front view illustrating a joining state of stator core divided bodies before the shrinkage fitting. In addition, a basic structure is the same as that of Embodiment 1, the same components are represented with the same reference numerals and corresponding components are represented with the same reference numerals with B to avoid repetition in a description.

A stator core 1 B of this embodiment is also composed of a plurality of stator core divided bodies 9B having displacement portions D and deformation portions T. Each stator core divided body 9B is a piece of the yoke portion 3B that is divided in a circumferential direction with division lines 11 B spanning between inner and outer peripheries.

In a shrinkage fitting state to a motor case 7 of FIG. 9, an outer peripheral edge 3Ba of the yoke portion 3B has the same curvature as an inner peripheral surface 7a of the motor case 7, and on the radial inner edge inner peripheral edges 3Bb and 3Bc are formed on both sides in the circumferential direction of each stator core divided body 9B.

Each stator core divided body 9B is constructed with respect to each tooth portion 5 having a yoke component portion 9Ba. Each stator core divided body 9B is annularly arranged so that division edges 11Ba and 11Bb at each division line 11 B face each other without a gap in the circumferential direction.

Each stator core divided body 9B is provided with a pair of slits 21 a and 21 b having no gap and rotatable portions 23a and 23b between the slits 21 a and 21 b and respective adjacent yoke component portions 9Ba.

Each slit 21 a, 21 b is formed from a radial outer edge 13Bd to a middle portion in a radial direction. At an inner end portion of each slit 21 a, 21 b, a hole 21 aa, 21ba is formed. On the inner peripheral edges 3Bb and 3Bc on both sides in the circumferential direction of each stator core divided body 9B, semicircle portions 25a and 25b are formed corresponding to the holes 21 aa and 21ba in the radial direction. Between the holes 21 aa and 21ba and the semicircle portions 25a and 25b, the deformation portions T are constructed.

According to this embodiment, concave and convex portions 17B and 19B formed in each interspace of the circumferentially-facing rotatable portion 23a and 23b construct an engagement portion.

When manufacturing, in a divided body processing step S1, the stator core divided bodies 9B that are provided with the displacement portions D and the deformation portions T, and in an assembling step S2, each stator core divided body 9B is annularly arranged so that individual division edges 11Ba and 11Bb face each other in the circumferential direction as illustrated in FIG. 10.

Before attaching to the motor case 7 by shrinkage fitting in Fig. 10, each yoke component portion 9Ba of each annularly-joined stator core divided body 9B causes the central portion side between the slits 21 a and 21 b of a part of the radial outer edge 13Bb as the displacement portion D to protrude outwardly in the radial direction with respect to the internal diameter dimension of the inner peripheral surface 7a that is shrunk due to the shrinkage fitting after the assembling in FIG. 9 i.e. with respect to the outer dimension of an outer peripheral edge 3Ba of the yoke portion 3B after the attaching by shrinkage fitting.

Further, the slits 21 a and 21 b open in the circumferential direction and the rotatable portions 23a and 23b are in a before-rotation state that forms gaps between adjacent rotatable portions 23b and 23a corresponding to the slits 21 a and 21 b according to the open state of the slits 21 a and 21 b.

With the attaching to the motor case 7 by shrinkage fitting of FIG. 9, the radially-inward pressing force from the motor case 7 acts to displace the displacement portion D through the slits 21 a and 21 b, and the rotatable portions 23b and 23a are rotated so as to close the slits 21 a and 21 b and the gaps, thereby to deform the deformation portions T.

When the deformation portions T deform according to the displacement of the displacement portion D, the central portion of each yoke component portion 9Ba frictionally engages with the inner peripheral surface 7a of the motor case 7 as illustrated in FIG. 9, thereby to annularly stably assemble each stator core divided body 9B.

With the deformation of the deformation portions T according to the displacement of the displacement portion D, the tensile stress σ1 is generated and the tensile stress σ1 forms tensile stress regions A through which the magnetic flux passes between the yoke portion and each tooth portion 5.

Further, with the generated tensile stress σ1, the compression stress σ2 generated by the pressing force from the motor case 7 is counterbalanced, thereby to reduce or zero the compression stress.

In this way, this embodiment also provides the same effects as Embodiment 1.

### EMBODIMENT 4

FIGs. 11 and 12 relate to Embodiment 4 of the present invention in which FIG. 11 is a partial front view illustrating a state where a stator core is fitted to a motor case by shrinkage fitting and FIG. 12 is a partial front view illustrating a joining state of stator core divided bodies before the shrinkage fitting. In addition, a basic structure is the same as that of Embodiment 3, the same components are represented with the same reference numerals and corresponding components are represented with the same reference numerals with C instead of B to avoid repetition in a description.

In a stator core 1C of this embodiment, a single slit 21C is formed at the center of each yoke component portion 9Ca of each stator core divided body 9C. Semicircle portions 25Ca and 25Cb constructing deformation portions T at intermediates with respect to the hole 21 Ca are provided at corners between each yoke component portion 9Ca and each tooth portion 5.

Therefore, both sides of the slit 21C are configured as rotatable portions 23Ca and 23Cb and the slit 21C sides on the rotatable portions 23Ca and 23Cb are configured as displacement portions D.

Before attaching to the motor case 7 by shrinkage fitting in Fig. 12, each yoke component portion 9Ca of each annularly-joined stator core divided body 9C causes the slit 23C sides on the rotatable portions 23Ca and 23Cb as the displacement portions D to protrude outwardly in the radial direction with respect to the internal diameter dimension of the inner peripheral surface 7a that is shrunk due to the shrinkage fitting after the assembling in FIG. 11 i.e. with respect to the outer dimension of an outer peripheral edge 3Ca of the yoke portion 3C after the attaching by shrinkage fitting.

Further, the slit 21C open in the circumferential direction and the rotatable portions 23Ca and 23Cb are in a before-rotation state that forms gaps corresponding to the slit 21C in interspaces relative to adjacent rotatable portions 23Cb and 23Ca according to the open state of the slit 21C.

With the attaching to the motor case 7 by shrinkage fitting of FIG. 11, the radially-inward pressing force from the motor case 7 acts to displace the displacement portions D through the slit 21C, and the rotatable portions 23Cb and 23Ca are rotated so as to close the slit 21C and the gaps, thereby to deform the deformation portions T.

When the deformation portions T deform according to the displacement of the displacement portions D, the central portion of each yoke component portion 9Ca frictionally engages with the inner peripheral surface 7a of the motor case 7 as illustrated in FIG. 11, thereby to annularly stably assemble each stator core divided body 9C.

With the deformation of the deformation portions T according to the displacement of the displacement portions D, the tensile stress σ1 is generated and the tensile stress σ1 forms tensile stress regions A through which the magnetic flux passes between the yoke portion and each tooth portion 5.

Further, with the generated tensile stress σ1, the compression stress σ2 generated by the pressing force from the motor case 7 is counterbalanced, thereby to reduce or zero the compression stress.

In this way, this embodiment also provides the same effects as Embodiment 1.

### EMBODIMENT 5

FIGs. 13 to 16 relate to Embodiment 5 of the present invention in which FIG. 13 is a partial front view of stator core, FIG. 14 is a process chart illustrating a stator core manufacturing method, FIG. 15 is a partial front view illustrating the stator core before attaching, and FIG. 16 is a partial front view illustrating the stator core before the shrinkage fitting, together with the motor case before shrinkage due to the shrinkage fitting. In addition, a basic structure is the same as that of Embodiment 1, the same components are represented with the same reference numerals and corresponding components are represented with the same reference numerals with D to avoid repetition in a description.

As illustrated in FIG. 13, a stator core 1 D of this Embodiment 5 has a yoke portion 3D that is a ring shape continuous in a circumferential direction.

This embodiment has no concave and convex portions 19 and 17 as the engagement portion of Embodiment 1 and has an inner portion 15D that is formed into a ring shape being continuous in the circumferential direction.

As illustrated in FIG. 14, a stator core manufacturing method of this embodiment has a core processing step S10 for manufacturing the stator core 1 D and an assembling step S11.

In the core processing step S10, the stator core 1 D illustrated in FIG. 15 is formed. The stator core 1 D has outer portions 13D, the inner portion 15D, the yoke portion 3D and tooth portions 5D, a radial outer edge 13Dd side of each outer portion 13D protrudes outwardly in a radial direction.

The radial outer edge 13Dd side of each outer portion 13D of the stator core 1 D protrudes outwardly in the radial direction with respect to the internal diameter dimension of an inner peripheral surface 7a that is shrunk due to shrinkage fitting after assembling in FIG. 13 i.e. with respect to the outer dimension of an outer peripheral edge 3Da of the yoke portion 3D after attaching by shrinkage fitting.

In the assembling step, the stator cores 1 Da of FIG. 15 are laminated in a thickness direction and arranged on an inner periphery of the motor case 7 as illustrated in FIG. 16. At this time, the inner portion 15D and the tooth portions 5D are integrated with each other, no gap is formed therebetween, and other gaps in the other parts are the same as those of Embodiment 1.

The stator core 1 D arranged on the inner periphery of the motor case 7 is attached by shrinkage fitting with a radially-inward interference, and becomes the state of FIG. 13.

When a deformation portion T deforms according to a displacement of a displacement portion D, the outer portion 13D is pressed against the inner peripheral surface 7a of the motor case 7 and frictionally engages therewith, thereby to surely fix each stator core 1 D.

With the deformation of the deformation portion T according to the displacement of the displacement portion D, in each outer portion 13D, the tensile stress σ1 is generated on a radial inner edge 13Dc side and the tensile stress σ1 forms the tensile stress region A through which the magnetic flux passes between the yoke portion and each tooth portion 5.

Further, with the generated tensile stress σ1, the compression stress σ2 generated by the pressing force from the motor case 7 on the radial outer edge 13Dd side of each outer portion 13D is counterbalanced, thereby to reduce or zero the compression stress.

Therefore, this embodiment also provides the same effects as Embodiment 1.

Further, since the stator core 1 Da is not divided, it is easy to be handled, reduces the number of components, and facilitates the assembly work and parts management.

Incidentally, a slight gap may be formed between the radial inner edge 13Dc of each outer portion 13D and the radial outer edge 15Da of each inner portion 15D after the assembling. This gap is along a direction in which the magnetic flux passes and has no influence.

### EMBODIMENT 6

FIGs. 17 and 18 relate to Embodiment 6 of the present invention in which FIG. 17 is a partial front view illustrating a stator core before shrinkage fitting together with a motor case before shrinkage due to the shrinkage fitting, FIG. 18 is a partial front view illustrating a state where the stator core is fitted to the motor case by shrinkage fitting. In addition, a basic structure is the same as that of Embodiment 5, the same components are represented with the same reference numerals and corresponding components are represented with the same reference numerals with E instead of D to avoid repetition in a description.

As illustrated in FIGs. 17 and 18, a stator core 1 E of this Embodiment 6 has a yoke portion 3E that is formed into a ring shape being continuous in a circumferential direction.

The yoke portion 3E of this embodiment makes a circumferential length of an outer portion 13E longer than that of Embodiment 5.

As illustrated in FIG. 18, when the stator core 1 E is fixed to a motor case 7 by shrinkage fitting or the like with an interference, a radial outer edge 13Ed side of each outer portion 13E is pressed inwardly in a radial direction like Embodiment 5. With this pressing, a thrust is generated outwardly in the radial direction with respect to an inner peripheral surface 7a of the motor case 7, at the same time, the outer portion 13E tends to straighten in the circumferential direction.

With this, a front end 13Eaa of one side 13Ea in the circumferential direction of each outer portion 13E strongly contacts with a front end 13Eba on the other side 13Eb in the circumferential direction of each adjacent outer portion 13E, so that a thrust is generated on the contacting faces and compression stress is generated on each outer portion 13E in the circumferential direction simultaneously.

According to this compression stress, compression stress is generated in the circumferential direction on the outer portion 13E. With the compression stress, a force with which each outer portion 13E as itself tends to extend in the circumferential direction is generated. With this force, an inner portion 15E is extended in the circumferential direction to generate tensile stress as a whole. With this tensile stress, the magnetic permeability of the yoke portion 3E improves to reduce iron loss, thereby to increase the output efficiency of the motor.

Additionally, it provides the same effects as Embodiment 5.

### DESCRIPTION OF NOTATIONS

1, 1 A, 1 B, 1C, 1 D Stator core
1 Da Semi-finished core
3, 3A, 3B, 3C, 3D Yoke portion
5 Tooth portion
7 Motor case (annular member)
7a Inner peripheral surface
9, 9A, 9B, 9C Stator core divided body
11a, 11b Division line
13, 13A, 13D Outer portion
13Aaa, 13Aba Inclined face (engagement portion)
15, 15A, 15D Inner portion
17, 17B, 17C Concave portion (engagement portion)
19, 19B, 19C Convex portion (engagement portion)
21a, 21b, 21C Slit
23a, 23b Rotatable portion
D Displacement portion
T Deformation portion
S1 Divided body processing step
S2, S11 Assembling step
S10 Semi-finished core processing step

## Claims

1. A stator core for a motor comprising:
an annular yoke portion (3); and
tooth portions (5) protruding inwardly in a radial direction from an inner periphery of the yoke portion (3),
wherein an outer peripheral edge (3a) of the yoke portion (3) is attached to an inner peripheral surface (7a) of an annular member (7),
wherein the yoke portion (3) Includes displacement portions (D) displaced by receiving radially-inward pressing force from the annular member (7), and deformation portions (T) deformed according to displacements of the displacement portions (D) to generate tensile stress so as to form tensile stress regions through which magnetic flux passes between the tooth portions (5) and the yoke portion (3) or so as to counterbalance compression stress generated by the pressing force from the annular member (7),
wherein the displacement portions (D), which protrude outwardly in the radial direction before the yoke portion (3) is attached to the annular member (7) with respect to an internal diameter dimension of the inner peripheral surface (7a) of the annular member (7) after attaching, perform the displacements by attaching the yoke portion (3) to the annular member (7) with an interference to bring circumferentially-adjacent ones of the displacement portions (D) into contact with each other in the circumferential direction with said displacements, thereby to generate the tensile stress on the respective deformation portions (T),
wherein the stator core includes stator core divided bodies (9) divided in a circumferential direction with divisions that span between the inner and outer peripheries at the yoke portion (7) and having yoke component portions (9a) on an external diameter side of the tooth portions (5), the yoke component portion (9a) having the displacement portion (D) and the deformation portion (T),
wherein the attaching with the interference is performed with each stator core divided body (9) annularly arranged before the attaching so that division edges at each division face each other in the circumferential direction,
wherein said each stator core divided body (9) has an outer portion (13) and an inner portion (15) in the radial direction that are formed in the circumferential direction by said each division,
wherein the outer portion (13) is arranged so as to protrude along one side in the circumferential direction of the yoke component portion (9a),
wherein the Inner portion (15) is arranged so as to protrude along another side in the circumferential direction of the yoke component portion (9a) on an internal diameter side relative to the outer portion (13),
wherein a radial outer edge side of the outer portion (13) protrudes outwardly in the radial direction as the displacement portion (D) before the yoke portion (3) is attached to the annular member (7),
wherein a radial inner edge side of the outer portion (13) has a gap in an interspace with respect to a radial outer edge of the inner portion (15) as the deformation portion (T) before the yoke portion (3) is attached to the annular member (7), and
wherein deformations of the deformation portions (T) and the displacements of the displacement portions (D) are performed by attaching the yoke portion (3) to the annular member (7) with the interference.

2. The stator core according to claim 1, wherein an engagement portion (13, 17, 19) through which the deformation portion (T) of one stator core divided body (9) engages with another stator core divided body so as to cause the deformation Is provided at each interspace of the annularly-arranged stator core divided bodies.

3. The stator core according to claim 2, wherein the engagement portion (17, 19) is concave and convex portions at each interspace of the outer portions (13), or inclined faces (13Aaa, 13Aba) formed at each interspace of the outer portions (13) to permit a radially-outward deviation while a front end of said each outer portion contacts with a base portion side of said each outer portion.

4. The stator core according to claim 1, wherein each inner portion (15) of the annularly-arranged yoke component portions (9a), which has a gap in an interspace with respect to said each tooth portion (5) in the circumferential direction before the attaching, faces said each tooth portion without the gap by the attaching to the annular member (7) so as to become a zero-compression-stress state or so as to become a state in which, if compression stress is generated in an external diameter side of the outer portion, compression stress is less than the compression stress generated in the external diameter side.

5. A stator core for a motor comprising:
an annular yoke portion (3); and
tooth portions (5) protruding inwardly in a radial direction from an inner periphery of the yoke portion (3),
wherein an outer peripheral edge (3a) of the yoke portion (3) is attached to an inner peripheral surface (7a) of an annular member (7),
wherein the yoke portion (3) includes displacement portions (D) displaced by receiving radially-inward pressing force from the annular member (7), and deformation portions (T) deformed according to displacements of the displacement portions (D) to generate tensile stress so as to form tensile stress regions through which magnetic flux passes between the tooth portions (5) and the yoke portion (3) or so as to counterbalance compression stress generated by the pressing force from the annular member (7),
wherein the displacement portions (D), which protrude outwardly in the radial direction before the yoke portion (3) is attached to the annular member (7) with respect to an internal diameter dimension of the inner peripheral surface (7a) of the annular member (7) after attaching, perform the displacements by attaching the yoke portion (3) to the annular member (7) with an interference to bring circumferentially-adjacent ones of the displacement portions (D) into contact with each other in the circumferential direction with said displacements, thereby to generate the tensile stress on the respective deformation portions (T).
wherein the stator core includes stator core divided bodies (9) divided in a circumferential direction with divisions that span between the inner and outer peripheries at the yoke portion (7) and having yoke component portions (9a) on an external diameter side of the tooth portions (5), the yoke component portion (9a) having the displacement portion (D) and the deformation portion (T),
wherein the attaching with the interference is performed with each stator core divided body (9) annularly arranged before the attaching so that division edges at each division face each other in the circumferential direction,
wherein said each yoke component portion (9a) has a slit (21 a, 21 b, 21 c) formed from the radial outer peripheral edge to a middle portion in the radial direction and a rotatable portion (23a, 23b) between the slit and an adjacent yoke component,
wherein a part of the radial outer peripheral edge of said each yoke component portion (9a) protrudes as the displacement portion according to an open state in the circumferential direction of the slit (21a, 21b, 21c) before the attaching to the annular member (7),
wherein the rotatable portion (23a, 23b) is in a before-rotation state that forms a gap corresponding to the slit in an interspace with respect to an adjacent rotatable portion in the circumferential direction according to the open state in the circumferential direction of the slit before the attaching to the annular member, and
wherein the displacement of the displacement portion (D) is performed by the slit by the attaching to the annular portion, thereby to rotate the rotatable portion (23a, 23b) so as to close the slit and the gap and perform the deformation of the deformation portion (T),

6. The stator core according to claim 5, wherein an engagement portion through which one rotatable portion (23a, 23b) engages with another rotatable portion to cause the rotating is provided at each interspace of the annularly-arranged stator core divided bodies (9a).

7. A stator core for a motor comprising:
an annular yoke portion (3); and
tooth portions (5) protruding inwardly in a radial direction from an inner periphery of the yoke portion (3),
wherein an outer peripheral edge (3a) of the yoke portion (3) is attached to an inner peripheral surface (7a) of an annular member (7),
wherein the yoke portion (3) includes displacement portions (D) displaced by receiving radially-inward pressing force from the annular member (7), and deformation portions (T) deformed according to displacements of the displacement portions (D) to generate tensile stress so as to form tensile stress regions through which magnetic flux passes between the tooth portions (5) and the yoke portion (3) or so as to counterbalance compression stress generated by the pressing force from the annular member (7),
wherein the displacement portions (D), which protrude outwardly in the radial direction before the yoke portion (3) is attached to the annular member (7) with respect to an internal diameter dimension of the inner peripheral surface (7a) of the annular member (7) after attaching, perform the displacements by attaching the yoke portion (3) to the annular member (7) with an interference to bring circumferentially-adjacent ones of the displacement portions (D) into contact with each other in the circumferential direction with said displacements, thereby to generate the tensile stress on the respective deformation portions (T),
wherein the yoke portion (3) is a ring shape being continuous in the circumferential direction.
wherein the yoke portion (3) has outer portions (13) and an inner portion (15) in the radial direction,
wherein the outer portions (13) are arranged so as to protrude along one side in the circumferential direction of yoke component portions (9a),
wherein the inner portion (15) is a ring shape being continuous in the circumferential direction,
wherein radial outer edge sides of the outer portions (13) outwardly protrude in the radial direction as the displacement portions (D) before the yoke portion (3) Is attached to the annular member (7),
wherein radial inner edge sides of the outer portion (13) have gaps in interspaces with respect to the inner portion (15) as the deformation portions (T) before the yoke is attached to the annular member (7), and
wherein the displacements of the displacement portions (D) and deformations of the deformation portions (T) are performed by attaching the yoke portion (3) to the annular member (7) with the interference.

8. The stator core according to claim 7,
wherein a front end on the one side in the circumferential direction of said each outer portion (13) is formed so as to contact with a front end on another side in the circumferential direction of an adjacent one of the outer portions with said displacements, and
wherein the tensile stress is generated in the inner portion (15).

9. A stator core manufacturing method for manufacturing the stator core according to any one of claims 1 to 6, comprising:
a divided body processing step processing a plurality of stator core divided bodies (9) having the displacement portions (D) and the deformation portions (T); and
an assembling step annularly arranging the plurality of stator core divided bodies (9) so that division edges face each other in the circumferential direction, respectively and attaching the stator core bodies (9) to the inner peripheral surface of the annular member (7) with a radially-inward interference, thereby to conduct deformations of the deformation portions (T) due to the displacements of the displacement portions (D).

10. A stator core manufacturing method for manufacturing the stator core according to claim 7 or 8, comprising:
a core processing step forming the ring-shaped stator core having the displacement portions (D) and the deformation portions (T) before the attaching to the annular member (7); and
an assembling step attaching the stator core (1) to an inner periphery of the annular member (7) with a radially-inward interference, thereby to conduct the deformations of the deformation portions (T) due to the displacements of the displacement portions (D).

11. The method according to claim 9 or 10, wherein the attaching to the annular member (7) is shrinkage fitting.

## Patentansprüche

1. Ein Statorkern für einen Motor aufweisend:
einen ringförmigen Jochabschnitt (3); und
von einem inneren Umfang des Jochabschnitts (3) in radialer Richtung nach innen vorstehende Zahnabschnitte (5),
wobei eine äußere Umfangskante (3a) des Jochabschnitts (3) an einer inneren Umfangsfläche (7a) eines ringförmigen Teils (7) befestigt ist,
wobei der Jochabschnitt (3) Verschiebungsabschnitte (D), die durch eine radial nach innen wirkende Druckkraft von dem ringförmigen Teil (7) verschoben werden, und Deformationsabschnitte (T) aufweist, die in Abhängigkeit von den Verschiebungen der Verschiebungsabschnitte (D) deformiert werden, um Zugspannungen zu erzeugen, so dass Zugspannungsbereiche gebildet werden, durch die magnetischer Fluss zwischen den Zahnabschnitten (5) und dem Jochabschnitt (3) hindurchtritt,
oder so dass durch die Druckkraft von dem ringförmigen Teil (7) erzeugte Druckspannungen ausgeglichen werden,
wobei die Verschiebungsabschnitte (D), die vor dem Befestigen des Jochabschnitts (3) an dem ringförmigen Teil (7) in Bezug auf die Abmessung eines Innendurchmessers der inneren Umfangsfläche (7a) des ringförmigen Teils (7) nach dem Befestigen in radialer Richtung vorstehen,
die Verschiebungen ausüben, indem der Jochabschnitt (3) an dem ringförmigen Teil (7) mit einem Eingriff befestigt wird, um Verschiebungsabschnitte (D), die umfangsmäßig nebeneinander liegen, in der Umfangsrichtung mit den Verschiebungen miteinander in Kontakt zu bringen, wodurch auf den jeweiligen Deformationsabschnitten (T) Zugspannungen (T) erzeugt werden,
wobei der Statorkern von dem Statorkern abgeteilte Körper (9) aufweist, die in einer Umfangsrichtung mit Bereichen abgeteilt sind, die sich zwischen dem Innen- und Außenumfang an dem Jochabschnitts (7) erstrecken und an einer Außendurchmesserseite der Zahnabschnitte (5) Jochkomponentenbereiche (9a) haben, wobei der
Jochkomponentenbereich (9a) den Verschiebungsabschnitt (D) und den Deformationsabschnitt (T) hat,
wobei das Befestigen mit dem Eingriff durchgeführt wird, wenn jeder von dem Statorkern abgeteilte Körper (9) vor dem Befestigen ringförmig angeordnet ist, so dass Bereichskanten an jedem Bereich in der Umfangsrichtung einander zugewandt sind,
wobei jeder von dem Statorkern abgeteilte Körper (9) einen äußeren Abschnitt (13) und einen inneren Abschnitt (15) in der radialen Richtung hat, welche durch jeden Bereich in Umfangsrichtung gebildet werden,
wobei der äußere Bereich (13) derart angeordnet ist, dass dieser entlang einer Seite in der Umfangsrichtung des Jochkomponentenbereichs (9a) vorsteht,
wobei der innere Abschnitt (15) derart angeordnet ist, dass dieser entlang einer anderen Seite in der Umfangsrichtung des Jochkomponentenbereichs (9a) an einer Innendurchmesserseite relativ zu dem äußeren Abschnitt (13) vorsteht,
wobei eine radiale Außenkantenseite des äußeren Abschnitts (13) vor dem Befestigen des Jochabschnitts (3) an dem ringförmigen Teil (7) wie der Verschiebungsabschnitt (D) in radialer Richtung nach außen vorsteht,
wobei eine radiale Innenkantenseite des äußeren Abschnitts (13) vor dem Befestigen des Jochabschnitts (3) an dem ringförmigen Teil (7) wie der Deformationsabschnitt (T) einen Spalt in einem Zwischenraum in Bezug auf eine radiale äußere Kante des inneren Abschnitts (15) hat, und
wobei die Deformationen der Deformationsabschnitte (T) und die Verschiebungen der Verschiebungsabschnitte (D) durchgeführt werden,
indem der Jochabschnitt (3) an dem ringförmigen Teil (7) mit dem Eingriff befestigt wird.

2. Der Statorkern nach Anspruch 1, wobei ein Eingriffsabschnitt (13, 17, 19), durch den der Deformationsabschnitt (T) eines von dem Statorkern abgeteilten Körpers (9) mit einem anderen von dem Statorkern abgeteilten Körper (9) im Eingriff ist, so dass die Deformation verursacht wird, an jedem Zwischenraum der von dem Statorkern abgeteilten Körper (9), die ringförmig angeordnet sind, vorgesehen ist.

3. Der Statorkern nach Anspruch 2, wobei der Eingriffsabschnitt (13, 17, 19) konkav ist und konvexe Abschnitte an jedem Zwischenraum der äußeren Bereiche (13), oder geneigte Flächen (13Aaa, 13Aba), die an jedem Zwischenraum der äußeren Bereiche (13) ausgebildet sind, um eine Verschiebung radial nach außen zu erlauben, während ein vorderes Ende jedes äußeren Abschnitts mit einer Basisabschnittsseite jedes äußeren Bereichs in Kontakt ist.

4. Der Statorkern nach Anspruch 1, wobei jeder innere Abschnitt (15) der von dem Statorkern abgeteilten Körper (9), die ringförmig angeordnet sind, welcher vor dem Befestigen in einem Zwischenraum in Bezug auf jeden Zahnabschnitt (5) in der Umfangsrichtung einen Spalt hat, durch das Befestigen an dem ringförmigen Teil (7) jedem Zahnabschnitt ohne einen Spalt zugewandt ist, so dass ein Zustand ohne Druckspannung entsteht oder so dass ein Zustand entsteht, in dem, wenn eine Druckspannung in einer Außendurchmesserseite des äußeren Bereichs erzeugt wird, die Druckspannung kleiner als die Druckspannung ist, die in der Außendurchmesserseite erzeugt wird.

5. Ein Statorkern für einen Motor aufweisend:
einen ringförmigen Jochabschnitt (3); und
von einem inneren Umfang des Jochabschnitts (3) in radialer Richtung nach innen vorstehende Zahnabschnitte (5),
wobei eine äußere Umfangskante (3a) des Jochabschnitts (3) an einer inneren Umfangsfläche (7a) eines ringförmigen Teils (7) befestigt ist,
wobei der Jochabschnitt (3) Verschiebungsabschnitte (D), die durch eine radial nach innen wirkende Druckkraft von dem ringförmigen Teil (7) verschoben werden, und Deformationsabschnitte (T) aufweist, die in Abhängigkeit von den Verschiebungen der Verschiebungsabschnitte (D) deformiert werden, um Zugspannungen zu erzeugen, so dass Zugspannungsbereiche gebildet werden, durch die magnetischer Fluss zwischen den Zahnabschnitten (5) und dem Jochabschnitt (3) hindurchtritt,
oder so dass durch die Druckkraft von dem ringförmigen Teil (7) erzeugte Druckspannungen ausgeglichen werden,
wobei die Verschiebungsabschnitte (D), die vor dem Befestigen des Jochabschnitts (3) an dem ringförmigen Teil (7) in Bezug auf die Abmessung eines Innendurchmessers der inneren Umfangsfläche (7a) des ringförmigen Teils (7) nach dem Befestigen in radialer Richtung vorstehen,
die Verschiebungen ausüben, indem der Jochabschnitt (3) an dem ringförmigen Teil (7) mit einem Eingriff befestigt wird, um Verschiebungsabschnitte (D), die umfangsmäßig nebeneinander liegen, in der Umfangsrichtung mit den Verschiebungen miteinander in Kontakt zu bringen, wodurch auf den jeweiligen Deformationsabschnitten (T) Zugspannungen (T) erzeugt werden,
wobei der Statorkern von dem Statorkern abgeteilte Körper (9) aufweist, die in einer Umfangsrichtung mit Bereichen abgeteilt sind, die sich zwischen dem Innen- und Außenumfang an dem Jochabschnitts (7) erstrecken und
an einer Außendurchmesserseite der Zahnabschnitte (5) Jochkomponentenbereiche (9a) haben, wobei der
Jochkomponentenbereich (9a) den Verschiebungsabschnitt (D) und den Deformationsabschnitt (T) hat,
wobei das Befestigen mit dem Eingriff durchgeführt wird, wenn jeder von dem Statorkern abgeteilte Körper (9) vor dem Befestigen ringförmig angeordnet ist, so dass Bereichskanten an jedem Bereich in der Umfangsrichtung einander zugewandt sind,
wobei jeder Jochkomponentenbereich (9a) einen Schlitz (21 a, 21 b, 21 c),
der von der radialen Außenumfangskante bis zu einem mittleren Bereich in der radialen Richtung ausgebildet ist, und einen drehbaren Abschnitt (23a, 23b) zwischen dem Schlitz und einer benachbarten Jochkomponente hat,
wobei ein Teil der radialen Außenumfangskante des
Jochkomponentenbereichs (9a) wie der Verschiebungsabschnitt entsprechend einem offenen Zustand in der Umfangsrichtung des Schlitzes (21 a, 21 b, 21 c) vor dem Befestigen an dem ringförmigen Teil (7) vorsteht, wobei der drehbare Abschnitt (23a, 23b) in einem Zustand vor der Rotation ist, der einen Spalt bildet entsprechend dem Schlitz in einem Zwischenraum in Bezug auf einen benachbarten drehbaren Abschnitt in der Umfangsrichtung entsprechend dem offenen Zustand in der Umfangsrichtung des Schlitzes (21 a, 21 b, 21 c) vor dem Befestigen an dem ringförmigen Teil (7), und
wobei die Verschiebung des Verschiebungsabschnitts (D) durch den Schlitz durch das Befestigen an dem ringförmigen Teil durchgeführt wird, wodurch der drehbare Abschnitt (23a, 23b) gedreht wird, so dass der Schlitz und der Spalt geschlossen wird und die Deformation des Deformationsabschnitts (T) durchgeführt wird.

6. Der Statorkern nach Anspruch 5, wobei ein Eingriffsabschnitt, durch den ein drehbarer Abschnitt (23a, 23b) mit einem anderen drehbaren Abschnitt in Eingriff ist, um die Drehung zu verursachen, an jedem Zwischenraum der von dem Statorkern abgeteilten Körper (9a), die ringförmig angeordnet sind, vorgesehen ist.

7. Ein Statorkern für einen Motor aufweisend:
einen ringförmigen Jochabschnitt (3); und
von einem inneren Umfang des Jochabschnitts (3) in radialer Richtung nach innen vorstehende Zahnabschnitte (5),
wobei eine äußere Umfangskante (3a) des Jochabschnitts (3) an einer inneren Umfangsfläche (7a) eines ringförmigen Teils (7) befestigt ist,
wobei der Jochabschnitt (3) Verschiebungsabschnitte (D), die durch eine radial nach innen wirkende Druckkraft von dem ringförmigen Teil (7) verschoben werden, und Deformationsabschnitte (T) aufweist, die in Abhängigkeit von den Verschiebungen der Verschiebungsabschnitte (D) deformiert werden, um Zugspannungen zu erzeugen, so dass Zugspannungsbereiche gebildet werden, durch die magnetischer Fluss zwischen den Zahnabschnitten (5) und dem Jochabschnitt (3) hindurchtritt,
oder so dass durch die Druckkraft von dem ringförmigen Teil (7) erzeugte Druckspannungen ausgeglichen werden,
wobei die Verschiebungsabschnitte (D), die vor dem Befestigen des Jochabschnitts (3) an dem ringförmigen Teil (7) in Bezug auf die Abmessung eines Innendurchmessers der inneren Umfangsfläche (7a) des ringförmigen Teils (7) nach dem Befestigen in radialer Richtung vorstehen,
die Verschiebungen ausüben, indem der Jochabschnitt (3) an dem ringförmigen Teil (7) mit einem Eingriff befestigt wird, um Verschiebungsabschnitte (D), die umfangsmäßig nebeneinander liegen, in der Umfangsrichtung mit den Verschiebungen miteinander in Kontakt zu bringen, wodurch auf den jeweiligen Deformationsabschnitten (T) Zugspannungen (T) erzeugt werden,
wobei der Jochabschnitt (3) eine in Umfangsrichtung gleichbleibende Ringform hat,
wobei der Jochabschnitt (3) äußere Bereiche (13) und einen inneren Bereich (15) in der radialen Richtung hat,
wobei die äußeren Bereiche (13) derart angeordnet sind, dass sie entlang einer Seite in der Umfangsrichtung der Jochkomponentenbereiche (9a) vorstehen,
wobei der innere Bereich (15) eine in Umfangsrichtung gleichbleibende Ringform hat,
wobei die radialen Außenkantenseiten der äußeren Bereiche (13) wie die Verschiebungsbereiche (D) vor dem Befestigen des Jochabschnitts (3) an dem ringförmigen Teil (7) in der radialen Richtung nach außen vorstehen,
wobei die radialen Innenkantenseiten des äußeren Bereichs (13) wie die Deformationsabschnitte (T) vor dem Befestigen des Jochs an dem ringförmigen Teil (7) Spalte in Zwischenräumen in Bezug auf den inneren Abschnitt (15) haben, und
wobei die Verschiebungen der Verschiebungsabschnitte (D) und die Deformationen der Deformationsabschnitte (T) durchgeführt werden, indem der Jochabschnitt (3) mit dem Eingriff an dem ringförmigen Teil (7) befestigt wird.

8. Der Statorkern nach Anspruch 7, wobei ein vorderes Ende auf einer Seite in der Umfangsrichtung jedes äußeren Bereichs (13) derart ausgebildet ist, dass dieses mit dem vorderen Ende einer anderen Seite in der Umfangsrichtung eines benachbarten äußeren Bereichs der äußeren Bereiche mit den Verschiebungen in Kontakt ist, und
wobei die Druckspannung in dem inneren Bereich (15) erzeugt wird.

9. Ein Statorkern-Herstellungsverfahren zur Herstellung eines Statorkerns nach einem der Ansprüche 1 bis 6, aufweisend:
einen Prozessschritt für einen von dem Statorkern abgeteilten Körper zur Herstellung einer Mehrzahl von von dem Statorkern abgeteilten Körpern (9), die die Verschiebungsabschnitte (D) und die Deformationsabschnitte (T) haben; und
einen Montageschritt eines ringförmigen Anordnens der Mehrzahl von den von dem Statorkern abgeteilten Körpern (9), so dass Bereichskanten in der Umfangsrichtung jeweils einander zugewandt sind, und Befestigen der von dem Statorkern abgeteilten Körpern (9) an der Innenumfangsfläche des ringförmigen Teils (7) mit einem Eingriff radial nach innen, wodurch Deformationen der Deformationsabschnitte (T) infolge der Verschiebungen der Verschiebungsabschnitte (D) durchgeführt werden.

10. Ein Statorkern-Herstellungsverfahren zur Herstellung eines Statorkerns nach Anspruch 7 oder 8; aufweisend:
einen Prozessschritt für einen Kern des Formens des ringförmigen Statorkerns mit den Verschiebungsabschnitten (D) und den Deformationsabschnitten (T) vor dem Befestigen an dem ringförmigen Teil (7); und
einen Montageschritt des Befestigens des Statorkerns (1) an einem Innenumfang des ringörmigenTeils (7) mit einem Eingriff radial nach innen, wodurch Deformationen der Deformationsabschnitte (T) infolge der Verschiebungen der Verschiebungsabschnitte (D) durchgeführt werden.

11. Das Verfahren nach Anspruch 9 oder 10, wobei das Befestigen an dem ringförmigen Teil (7) Einpassen durch Schrumpfen ist.

## Revendications

1. Noyau de stator pour un moteur comprenant :
une partie de culasse annulaire (3) ; et
des parties dentées (5) faisant saillie vers l'intérieur dans une direction radiale depuis une périphérie intérieure de la partie de culasse (3),
dans lequel une arête périphérique extérieure (3a) de la partie de culasse (3) est attachée à une surface périphérique intérieure (7a) d'un élément annulaire (7),
dans lequel la partie de culasse (3) comporte des parties de déplacement (D) déplacées par la réception d'une force de pressage radialement vers l'intérieur par l'élément annulaire (7) et des parties de déformation (T) déformées selon les déplacements des parties de déplacement (D) pour générer une contrainte de traction de sorte à former des régions de contrainte de traction, au travers desquelles un flux magnétique passe entre les parties dentées (5) et la partie de culasse (3) ou de sorte à contrebalancer la contrainte de compression générée par la force de pressage par l'élément annulaire (7),
dans lequel les parties de déplacement (D), qui font saillie vers l'extérieur dans la direction radiale avant que la partie de culasse (3) ne soit attachée à l'élément annulaire (7) par rapport à une dimension de diamètre interne de la surface périphérique intérieure (7a) de l'élément annulaire (7) après l'attache, réalisent les déplacements par l'attache de la partie de culasse (3) à l'élément annulaire (7) avec une interférence pour amener des parties adjacentes sur la circonférence des parties de déplacement (D) en contact les unes avec les autres dans la direction circonférentielle avec lesdits déplacements, pour générer par là même la contrainte de traction sur les parties de déformation respectives (T), dans lequel le noyau de stator comporte des corps divisés de noyau de stator (9) divisés dans une direction circonférentielle avec des divisions qui traversent entre les périphéries intérieures et extérieures sur la partie de culasse (7) et présentant des parties de composant de culasse (9a) sur un côté de diamètre externe des parties dentées (5), la partie de composant de culasse (9a) présentant la partie de déplacement (D) et la partie de déformation (T),
dans lequel l'attache avec l'interférence est réalisée avec chaque corps divisé de noyau de stator (9) agencé en anneau avant l'attache de sorte que les arêtes de division sur chaque division se fassent face les unes aux autres dans la direction circonférentielle,
dans lequel chaque dit corps divisé de noyau de stator (9) a une partie extérieure (13) et
une partie intérieure (15) dans la direction radiale qui sont formées dans la direction circonférentielle par chaque dite division,
dans lequel la partie extérieure (13) est agencée de sorte à faire saillie le long d'un côté dans la direction circonférentielle de la partie de composant de culasse (9a),
dans lequel la partie intérieure (15) est agencée de sorte à faire saillie le long d'un autre côté dans la direction circonférentielle de la partie de composant de culasse (9a) sur un côté de diamètre interne par rapport à la partie extérieure (13),
dans lequel un côté d'arête extérieure radiale de la partie extérieure (13) fait saillie vers l'extérieur dans la direction radiale comme la partie de déplacement (D) avant que la partie de culasse (3) ne soit attachée à l'élément annulaire (7),
dans lequel un côté d'arête intérieure radiale de la partie extérieure (13) a un espace dans un interstice par rapport à une arête extérieure radiale de la partie intérieure (15) comme la partie de déformation (T) avant que la partie de culasse (3) ne soit attachée à l'élément annulaire (7) et
dans lequel les déformations des parties de déformation (T) et les déplacements des parties de déplacement (D) sont réalisés par l'attache de la partie de culasse (3) à l'élément annuaire (7) avec l'interférence.

2. Noyau de stator selon la revendication 1, dans lequel une partie d'engagement (13, 17, 19), par laquelle la partie de déformation (T) d'un corps divisé de noyau de stator (9) s'engage avec l'autre corps divisé de noyau de stator de sorte à entraîner la déformation, est prévue sur chaque interstice des corps divisés de noyau de stator agencés en anneau.

3. Noyau de stator selon la revendication 2, dans lequel la partie d'engagement (17, 19) est formée par des parties concaves et convexes sur chaque interstice des parties extérieures (13) ou des faces inclinées (13Aaa, 13Aba) formées sur chaque interstice des parties extérieures (13) pour permettre une déviation radialement vers l'extérieur alors qu'une extrémité avant de chaque dite partie extérieure touche un côté de partie de base de chaque dite partie extérieure.

4. Noyau de stator selon la revendication 1, dans lequel chaque partie intérieure (15) des parties de composant de culasse agencées en anneau (9a), qui a un espace dans un interstice par rapport à chaque dite partie dentée (5) dans la direction circonférentielle avant l'attache, fait face à chaque dite partie dentée sans l'espace par l'attache à l'élément annulaire (7) de sorte à devenir un état de contrainte à zéro compression ou de sorte à devenir un état dans lequel si la contrainte de compression est générée dans un côté de diamètre externe de la partie extérieure, la contrainte de compression est inférieure à la contrainte de compression générée dans le côté de diamètre externe.

5. Noyau de stator pour un moteur comprenant :
une partie de culasse annulaire (3) ; et
des parties dentées (5) faisant saillie vers l'intérieur dans une direction radiale depuis une périphérie intérieure de la partie de culasse (3),
dans lequel une arête périphérique extérieure (3a) de la partie de culasse (3) est attachée à une surface périphérique intérieure (7a) d'un élément annulaire (7),
dans lequel la partie de culasse (3) comporte des parties de déplacement (D) déplacées par la réception d'une force de pressage radialement vers l'intérieur par l'élément annulaire (7), et des parties de déformations (T) déformées selon les déplacements des parties de déplacement (D) pour générer une contrainte de traction de sorte à former des régions de contrainte de traction, au travers desquelles un flux magnétique passe entre les parties dentées (5) et la partie de culasse (3) ou de sorte à contrebalancer la contrainte de compression générée par la force de pressage par l'élément annulaire (7),
dans lequel les parties de déplacement (D), qui font saillie vers l'extérieur dans la direction radiale avant que la partie de culasse (3) ne soit attachée à l'élément annulaire (7) par rapport à une dimension de diamètre interne de la surface périphérique intérieure (7a) de l'élément annulaire (7) après l'attache, réalisent les déplacements par l'attache de la partie de culasse (3) à l'élément annulaire (7) avec une interférence pour amener des parties adjacentes sur la circonférence des parties de déplacement (D) en contact les unes avec les autres dans la direction circonférentielle avec lesdits déplacements, pour générer par là même la contrainte de traction sur les parties de déformation respectives (T), dans lequel le noyau de stator comprend des corps divisés de noyau de stator (9) divisés dans une direction circonférentielle avec des divisions qui traversent entre les périphéries intérieure et extérieure sur la partie de culasse (7) et présentant des parties de composants de culasse (9a) sur un côté de diamètre externe des parties dentées (5), la partie de composant de culasse (9a) présentant la partie de déplacement (D) et la partie de déformation (T),
dans lequel l'attache avec l'interférence est réalisée avec chaque corps divisé de noyau de stator (9) agencé en anneau avant l'attache de sorte que les arêtes de division sur chaque division se fassent face les unes aux autres dans la direction circonférentielle,
dans lequel chaque dite partie de composant de culasse (9a) a une fente (21a, 21b, 21c) formée de l'arête périphérique extérieure radiale à une partie médiane dans la direction radiale et une partie rotative (23a, 23b) entre la fente et un composant de culasse adjacent,
dans lequel une partie de l'arête périphérique extérieure radiale de chaque dite partie de composant de culasse (9a) fait saillie comme la partie de déplacement selon un état ouvert dans la direction circonférentielle de la fente (21a, 21b, 21c) avant l'attache à l'élément annulaire (7),
dans lequel la partie rotative (23a, 23b) est dans un état d'avant rotation qui forme un espace correspondant à la fente dans un interstice par rapport à une partie rotative adjacente dans la direction circonférentielle selon l'état ouvert dans la direction circonférentielle de la fente avant l'attache à l'élément annulaire et
dans lequel le déplacement de la partie de déplacement (D) est réalisé par la fente par l'attache à la partie annulaire, pour tourner par là même la partie rotative (23a, 23b) de sorte à fermer la fente et l'espace et réaliser la déformation de la partie de déformation (T).

6. Noyau de stator selon la revendication 5, dans lequel une partie d'engagement, par laquelle une partie rotative (23a, 23b) s'engage avec une autre partie rotative pour entraîner la rotation, est prévue sur chaque interstice des corps divisés de noyau de stator agencés en anneau (9a).

7. Noyau de stator pour un moteur comprenant :
une partie de culasse annulaire (3) ; et
des parties dentées (5) faisant saillie vers l'intérieur dans une direction radiale depuis une périphérie intérieure de la partie de culasse (3),
dans lequel une arête périphérique extérieure (3a) de la partie de culasse (3) est attachée à une surface périphérique intérieure (7a) d'un élément annulaire (7),
dans lequel la partie de culasse (3) comporte des parties de déplacement (D) déplacées par la réception de force de pressage radialement vers l'intérieur par l'élément annulaire (7) et
des parties de déformations (T) déformées selon les déplacements des parties de déplacement (D) pour générer une contrainte de traction de sorte à former des régions de contrainte de traction, au travers desquelles un flux magnétique passe entre les parties dentées (5) et la partie de culasse (3) ou de sorte à contrebalancer la contrainte de compression générée par la force de pressage par l'élément annulaire (7),
dans lequel les parties de déplacement (D) qui font saillie vers l'extérieur dans la direction radiale avant que la partie de culasse (3) ne soit attachée à l'élément annulaire (7) par rapport à une dimension de diamètre interne de la surface périphérique intérieure (7a) de l'élément annulaire (7) après l'attache, réalisent les déplacements par l'attache de la partie de culasse (3) à l'élément annulaire (7) avec une interférence pour amener des parties adjacentes sur la circonférence des parties de déplacement (D) en contact les unes avec les autres dans la direction circonférentielle avec lesdits déplacements, pour générer par là même la contrainte de traction sur les parties de déformation respectives (T),
dans lequel la partie de culasse (3) est une forme annulaire continue dans la direction circonférentielle,
dans lequel la partie de culasse (3) a des parties extérieures (13) et une partie intérieure (15) dans la direction radiale,
dans lequel les parties extérieures (13) sont agencées de sorte à faire saillie le long d'un côté dans la direction circonférentielle de parties de composant de culasse (9a),
dans lequel la partie intérieure (15) est une forme annulaire continue dans la direction circonférentielle,
dans lequel des côtés d'arête extérieure radiale des parties extérieures (13) font saillie vers l'extérieur dans la direction radiale comme les parties de déplacement (D) avant que la partie de culasse (3) ne soit attachée à l'élément annulaire (7),
dans lequel des côtés d'arête intérieure radiale de la partie extérieure (13) ont des espaces dans des interstices par rapport à la partie intérieure (15) comme les parties de déformation (T) avant que la culasse ne soit attachée à l'élément annulaire (7) et
dans lequel les déplacements des parties de déplacement (D) et les déformations des parties de déformation (T) sont réalisés par l'attache de la partie de culasse (3) à l'élément annulaire (7) avec l'interférence.

8. Noyau de stator selon la revendication 7,
dans lequel une extrémité avant sur l'un côté dans la direction circonférentielle de chaque dite partie extérieure (13) est formée de sorte à toucher une extrémité avant d'un autre côté dans la direction circonférentielle d'une partie adjacente des parties extérieures avec lesdits déplacements et
dans lequel la contrainte de traction est générée dans la partie intérieure (15).

9. Procédé de fabrication de noyau de stator pour la fabrication du noyau de stator selon l'une quelconque des revendications 1 à 6, comprenant :
une étape de traitement de corps divisé traitant une pluralité de corps divisés de noyau de stator (9) présentant les parties de déplacement (D) et les parties de déformation (T) ; et
une étape d'assemblage agençant en anneau la pluralité de corps divisés de noyau de stator (9) de sorte que des arêtes de division se fassent face l'une à l'autre dans la direction circonférentielle respectivement et attachant les corps de noyau de stator (9) à la surface périphérique intérieure de l'élément annulaire (7) avec une interférence radialement vers l'intérieur, pour conduire par là même des déformations des parties de déformation (T) dues aux déplacements des parties de déplacement (D).

10. Procédé de fabrication de noyau de stator pour la fabrication du noyau de stator selon la revendication 7 ou 8, comprenant :
une étape de traitement de noyau formant le noyau de stator annulaire présentant les parties de déplacement (D) et les parties de déformation (T) avant l'attache à l'élément annulaire (7) ; et
une étape d'assemblage attachant le noyau de stator (1) à une périphérie intérieure de l'élément annulaire (7) avec une interférence radialement vers l'intérieur, pour conduire par là même les déformations des parties de déformation (T) dues aux déplacements des parties de déplacement (D).

11. Procédé selon la revendication 9 ou 10, dans lequel l'attache à l'élément annulaire (7) est ajustée par frettage.
